# EUROPEAN PATENT APPLICATION

(11) **EP 4 725 782 A1**
(43) Date of publication of application: **15.04.2026**
(21) Application number: 25206692.3
(22) Date of filing: 03.10.2025
(51) Int. Cl.: B60W 10/18, B60Q 1/50, B60Q 1/52, B60W 10/20, B60W 30/18, B60W 50/023, B60W 50/029, B60W 50/14, B60W 60/00

(54) **VEHICLE PLATFORM AND METHOD FOR CONTROLLING VEHICLE PLATFORM**

(30) Priority: 10.10.2024 JP 2024177959
(71) Applicant: TOYOTA JIDOSHA KABUSHIKI KAISHA, Toyota-shi, Aichi-ken 471-8571 (JP)
(72) Inventor: TANAKA, Go, TOYOTA-SHI, AICHI-KEN, 471-8571 (JP); SUZUKI, Ikuma, TOYOTA-SHI, AICHI-KEN, 471-8571 (JP); HAYASHI, Taisuke, TOYOTA-SHI, AICHI-KEN, 471-8571 (JP); OZAWA, Kazuhiro, TOYOTA-SHI, AICHI-KEN, 471-8571 (JP); WATARI, Yuji, TOYOTA-SHI, AICHI-KEN, 471-8571 (JP)
(74) Representative: Cabinet Beau de Loménie

(57) **Abstract**

A driving mode of a VP set in each of main and sub VCIBs is switchable to an autonomous or manual driving mode. When a two-system failure occurs while the driving mode set in the main/sub VCIB is the autonomous driving mode, a base vehicle carries out control for emergency stop of the base vehicle (S316) and the main/sub VCIB controls an output unit to output a prescribed sign in a prescribed manner (S331 to S333 and S341 to S348), the two-system failure being a failure that makes communication or control via the first and second paths impossible. The main/sub VCIB sets the prescribed manner in accordance with a request from an ADK (S122, S432 and S433).

## Description

### CROSS REFERENCE TO RELATED APPLICATIONS

This nonprovisional application is based on Japanese Patent Application No. 2024-177959 filed on October 10, 2024 with the Japan Patent Office, the entire contents of which are hereby incorporated by reference and to which the person of the art can refer when considering the present disclosure.

### BACKGROUND

### Field

The present disclosure relates to a vehicle platform and a method for controlling the vehicle platform, and particularly to a vehicle platform to and from which an autonomous driving kit that gives an instruction for autonomous driving is attachable and detachable, the vehicle platform being configured to be capable of autonomous driving, and a method for controlling the vehicle platform.

### Description of the Background Art

There has conventionally been a vehicle platform (hereinafter referred to as "VP") on which an autonomous driving kit (hereinafter referred to as "ADK") is mountable, the VP including a base vehicle and a vehicle control interface box (hereinafter referred to as "VCIB") that interfaces between the base vehicle and an autonomous driving system through a communication bus (refer to, for example, Japanese Patent Laying-Open No. 2024-106017). In the VP, as paths through which signals are exchanged between the ADK and the VP, there are two systems, i.e., a path via a main bus and a main VCIB and a path via a sub bus and a sub VCIB.

### SUMMARY

In the VP in Japanese Patent Laying-Open No. 2024-106017, there is room for consideration in carrying out appropriate control when both of the two paths through which signals are exchanged between the ADK and the VP fail.

The present disclosure has been made to solve the above-described problem and an object thereof is to provide a vehicle platform in which a prescribed sign can be appropriately outputted to the surroundings even when both of two paths fail, and a method for controlling the vehicle platform.

A vehicle platform according to the present disclosure is a vehicle platform to and from which an autonomous driving kit that gives an instruction for autonomous driving is attachable and detachable, the vehicle platform being configured to be capable of autonomous driving. The vehicle platform includes: a base vehicle including an output unit that outputs a prescribed sign; a first vehicle control interface box that relays control communication between the autonomous driving kit and the base vehicle via a first path; and a second vehicle control interface box that relays control communication between the autonomous driving kit and the base vehicle via a second path. A driving mode of the vehicle platform set in each of the first vehicle control interface box and the second vehicle control interface box is switchable to an autonomous driving mode or a manual driving mode. When a two-system failure occurs while the driving mode set in the first vehicle control interface box is the autonomous driving mode, the base vehicle carries out control for emergency stop of the base vehicle and the first vehicle control interface box controls the output unit to output the prescribed sign in a prescribed manner, or when the two-system failure occurs while the driving mode set in the second vehicle control interface box is the autonomous driving mode, the base vehicle carries out the control for emergency stop of the base vehicle and the second vehicle control interface box controls the output unit to output the prescribed sign in a prescribed manner, the two-system failure being a failure that makes communication or control via the first path and the second path impossible. The first vehicle control interface box or the second vehicle control interface box sets the prescribed manner in accordance with a request from the autonomous driving kit.

According to such a configuration, the prescribed manner of outputting the prescribed sign is appropriately set in accordance with the request from the autonomous driving kit, before the two-system failure occurs. As a result, the vehicle platform in which the prescribed sign can be appropriately outputted to the surroundings even when both of the two paths fail can be provided.

The prescribed manner may be a timing when the prescribed sign is outputted. According to such a configuration, the timing when the prescribed sign is outputted is appropriately set in accordance with the request from the autonomous driving kit, before the two-system failure occurs. As a result, even when both of the two paths fail, the prescribed sign can be outputted to the surroundings at appropriate timing.

When the two-system failure occurs, the first vehicle control interface box or the second vehicle control interface box may prohibit setting of the prescribed manner in accordance with the request from the autonomous driving kit.

According to such a configuration, the request from the autonomous driving kit can become abnormal when the two-system failure occurs, and thus, setting of the prescribed manner in accordance with such request is prohibited. As a result, the prescribed manner of outputting the prescribed sign can be prevented from being inappropriately set.

When the two-system failure occurs, the first vehicle control interface box or the second vehicle control interface box may issue, to the autonomous driving kit, a request to cause an external output unit to output a specific sign, the external output unit being controlled by the autonomous driving kit and outputting the specific sign.

According to such a configuration, the specific sign can be outputted by means of not only control by the vehicle control interface box but also control by the autonomous driving kit.

According to another aspect of the present disclosure, a method for controlling a vehicle platform is a method for controlling a vehicle platform to and from which an autonomous driving kit that gives an instruction for autonomous driving is attachable and detachable, the vehicle platform being configured to be capable of autonomous driving. The vehicle platform includes: a base vehicle including an output unit that outputs a prescribed sign; a first vehicle control interface box that relays control communication between the autonomous driving kit and the base vehicle via a first path; and a second vehicle control interface box that relays control communication between the autonomous driving kit and the base vehicle via a second path. A driving mode of the vehicle platform set in each of the first vehicle control interface box and the second vehicle control interface box is switchable to an autonomous driving mode or a manual driving mode. The method includes: when a two-system failure occurs while the driving mode set in the first vehicle control interface box is the autonomous driving mode, carrying out, by the base vehicle, control for emergency stop of the base vehicle and controlling, by the first vehicle control interface box, the output unit to output the prescribed sign in a prescribed manner, or when the two-system failure occurs while the driving mode set in the second vehicle control interface box is the autonomous driving mode, carrying out, by the base vehicle, the control for emergency stop of the base vehicle and controlling, by the second vehicle control interface box, the output unit to output the prescribed sign in a prescribed manner, the two-system failure being a failure that makes communication or control via the first path and the second path impossible; and setting, by the first vehicle control interface box or the second vehicle control interface box, the prescribed manner in accordance with a request from the autonomous driving kit.

According to such a configuration, the method for controlling the vehicle platform in which the prescribed sign can be appropriately outputted to the surroundings even when both of the two paths fail can be provided.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing overview of a vehicle according to an embodiment of the present disclosure.
Fig. 2 is a diagram showing in detail configurations of an ADK, a VCIB and a VP according to the present embodiment.
Fig. 3 is a flowchart showing a flow of a process performed by each control system and a first process performed by each VCIB in the present embodiment.
Fig. 4 is a flowchart showing a flow of a process performed by the ADK and a second process performed by each VCIB in the present embodiment.
Fig. 5 is a flowchart showing a flow of a process performed by a body system in the present embodiment.

### DESCRIPTION OF THE PREFERRED EMBODIMENTS

An embodiment of the present disclosure will be described below in detail with reference to the drawings. The same or corresponding elements in the drawings have the same reference characters allotted and description thereof will not be repeated.

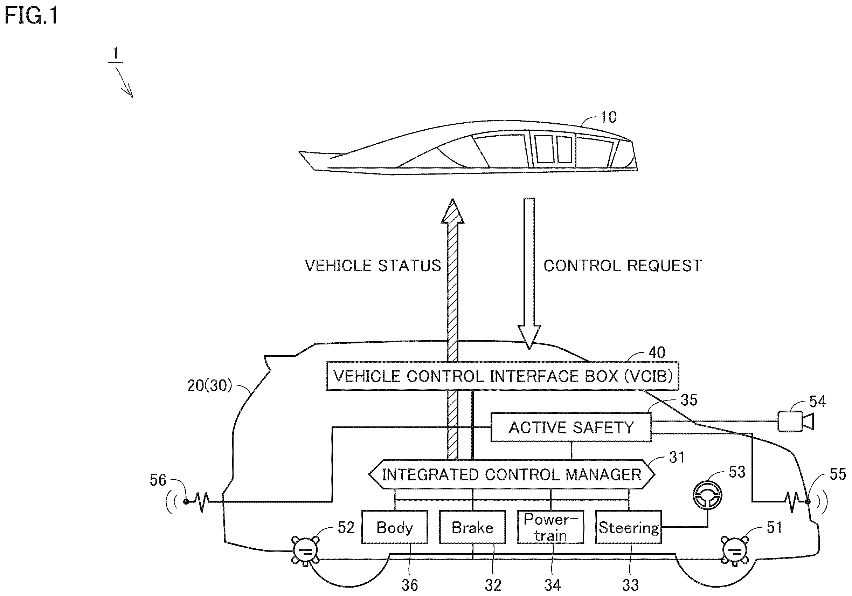

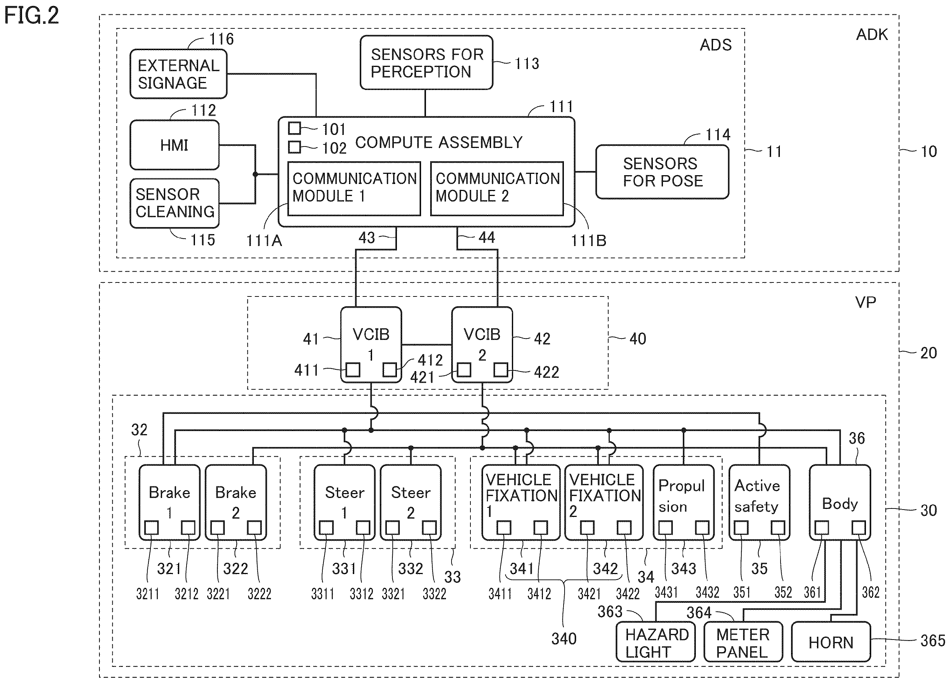

Fig. 1 is a diagram showing overview of a vehicle 1 according to an embodiment of the present disclosure. Fig. 2 is a diagram showing in detail configurations of an ADK 10, a VCIB 40 and a VP 20 according to the present embodiment. Referring to Figs. 1 and 2, vehicle 1 includes ADK 10 and VP 20. ADK 10 is configured as being attachable to VP 20 (mountable on vehicle 1). ADK 10 and VP 20 are configured to communicate with each other through VCIB 40.

VP 20 can carry out autonomous driving in accordance with control requests from ADK 10. Though Fig. 1 shows ADK 10 at a position distant from VP 20, ADK 10 is actually attached to a rooftop or the like of VP 20. ADK 10 can also be removed from VP 20. While ADK 10 is not attached, VP 20 carries out travel control (travel control in accordance with an operation by a user) in a manual mode (manual driving mode).

ADK 10 includes an autonomous driving system (ADS) 11 for autonomous driving of vehicle 1. For example, ADS 11 creates a driving plan of vehicle 1. ADS 11 outputs various control requests for travel of vehicle 1 in accordance with the driving plan to VP 20 in accordance with an application program interface (API) defined for each control request. ADS 11 receives various signals indicating vehicle statuses (statuses of VP 20) from VP 20 in accordance with the API defined for each signal. Then, ADS 11 has the vehicle status reflected on the driving plan.

VP 20 includes a base vehicle 30 and VCIB 40. Base vehicle 30 carries out various types of vehicle control in accordance with a control request from ADK 10 (ADS 11). Base vehicle 30 includes various vehicle-mounted systems and various sensors for controlling base vehicle 30. More specifically, base vehicle 30 includes an integrated control manager 31, a brake system 32, a steering system 33, a powertrain system 34, an active safety system 35, a body system 36, wheel speed sensors 51 and 52, a pinion angle sensor 53, a camera 54, and radar sensors 55 and 56.

Integrated control manager 31 includes a processor such as a central processing unit (CPU) and a memory such as a read only memory (ROM) and a random access memory (RAM), and integrally controls the systems (brake system 32, steering system 33, powertrain system 34, active safety system 35, and body system 36) involved with operations of vehicle 1.

Brake system 32 is configured to control a braking apparatus provided in each wheel of base vehicle 30. The braking apparatus includes, for example, a disc brake system that is operated with a hydraulic pressure regulated by an actuator.

Wheel speed sensors 51 and 52 are connected to brake system 32. Wheel speed sensors 51 and 52 detect rotation speeds of a front wheel and a rear wheel of base vehicle 30 and output the detected rotation speeds of the front wheel and the rear wheel to brake system 32, respectively. Brake system 32 outputs to VCIB 40, the rotation speed of each wheel as one of pieces of information included in the vehicle statuses. Brake system 32 generates a braking command to a braking apparatus in accordance with a prescribed control request outputted from ADS 11 through VCIB 40 and integrated control manager 31. Brake system 32 controls the braking apparatus based on the generated braking command. Integrated control manager 31 can calculate a speed of vehicle 1 (vehicle speed) based on the rotation speed of each wheel.

Steering system 33 is configured to control a steering angle (wheel steer angle) of a steering wheel of vehicle 1 with a steering apparatus. The steering apparatus includes, for example, rack-and-pinion electric power steering (EPS) that allows adjustment of a steering angle by an actuator.

Pinion angle sensor 53 is connected to steering system 33. Pinion angle sensor 53 detects an angle of rotation of a pinion gear (a pinion angle) coupled to a rotation shaft of the actuator and outputs the detected pinion angle to steering system 33. Steering system 33 outputs to VCIB 40, the pinion angle as one of pieces of information included in the vehicle statuses. Steering system 33 generates a steering command to the steering apparatus in accordance with a prescribed control request outputted from ADS 11 through VCIB 40 and integrated control manager 31. Steering system 33 controls the steering apparatus based on the generated steering command.

Powertrain system 34 controls vehicle fixation systems 341 and 342 that control an electric parking brake (EPB) provided in at least one of a plurality of wheels and a parking lock (P-Lock) apparatus provided in a transmission of vehicle 1, and a propulsion system 343 including a shift apparatus configured to allow selection of a shift range.

Active safety system 35 detects an obstacle (a pedestrian, a bicycle, a parked vehicle, a utility pole, or the like) in front or in the rear with the use of camera 54 and radar sensors 55 and 56. Active safety system 35 determines whether or not vehicle 1 may collide with the obstacle based on a distance between vehicle 1 and the obstacle and a direction of movement of vehicle 1. When active safety system 35 determines that there is possibility of collision, it outputs a braking command to brake system 32 through integrated control manager 31 so as to increase braking force.

Body system 36 is configured to control, for example, components such as a direction indicator (a turn lamp or a hazard light 363), a horn 365, a wiper, a headlamp, a brake lamp, and a meter panel 364, depending on a state of travel or an environment around vehicle 1. Body system 36 controls each component in accordance with a prescribed control request outputted from ADS 11 through VCIB 40 and integrated control manager 31.

VCIB 40 is configured to communicate with ADS 11 over a controller area network (CAN). VCIB 40 receives various control requests from ADS 11 or outputs a vehicle status to ADS 11 by executing a prescribed API defined for each signal. When VCIB 40 receives the control request from ADK 10, it outputs a control command corresponding to the control request to a system corresponding to the control command through integrated control manager 31. VCIB 40 obtains various types of information on base vehicle 30 from various systems through integrated control manager 31 and outputs the status of base vehicle 30 as the vehicle status to ADS 11.

Vehicle 1 may be used as one of constituent elements of a mobility as a service (MaaS) system. The MaaS system includes, for example, a data server and a mobility service platform (MSPF), in addition to vehicle 1.

The MSPF is an integrated platform to which various mobility services are connected. Autonomous driving related mobility services are connected to the MSPF. In addition to the autonomous driving related mobility services, mobility services provided by a ride-share company, a car-sharing company, a rent-a-car company, a taxi company, and an insurance company may be connected to the MSPF.

Vehicle 1 further includes a data communication module (DCM) capable of wirelessly communicating with a data server. The DCM outputs vehicle information such as a speed, a position, or an autonomous driving state to the data server. The DCM receives from the autonomous driving related mobility services through the MSPF and the data server, various types of data for management of travel of an autonomous driving vehicle including vehicle 1 in the mobility services.

The MSPF publishes APIs for using various types of data on vehicle statuses and vehicle control necessary for development of ADS 11. Various mobility services can use various functions provided by the MSPF depending on service contents, by using the APIs published on the MSPF. For example, the autonomous driving related mobility services can obtain operation control data of vehicle 1 or information stored in the data server from the MSPF by using the APIs published on the MSPF. The autonomous driving related mobility services can transmit data for managing an autonomous driving vehicle including vehicle 1 to the MSPF by using the API.

ADS 11 includes a compute assembly 111, a human machine interface (HMI) 112, sensors for perception 113, sensors for pose 114, a sensor cleaning 115, and an external signage 116.

Compute assembly 111 includes a processor 101 such as a CPU and a memory 102 such as a ROM and a RAM. A program executable by processor 101 is stored in memory 102. During autonomous driving of vehicle 1, compute assembly 111 obtains information indicating an environment around vehicle 1 and information indicating a pose, a behavior, and a position of vehicle 1 from various sensors (which will be described later), and obtains a vehicle status from VP 20 through VCIB 40 and sets a next operation (acceleration, deceleration, or turning) of vehicle 1. Compute assembly 111 outputs various commands for realizing a next operation to VCIB 40. Compute assembly 111 further includes communication modules 111A and 111B. Communication modules 111A and 111B are each configured to communicate with VCIB 40.

HMI 112 presents information to a user and accepts an operation by the user during autonomous driving, during manual driving requiring an operation by the user, or at the time of transition between autonomous driving and manual driving requiring an operation by the user. HMI 112 includes, for example, an input and output apparatus such as a touch panel display provided in base vehicle 30.

Sensors for perception 113 are sensors that perceive an environment around vehicle 1. Sensors for perception 113 include, for example, at least one of laser imaging detection and ranging (LIDAR), a millimeter-wave radar, and a camera. The LIDAR measures a distance and a direction to an object, for example, by emitting laser beams of infrared pulses and detecting laser beams reflected by the object. The millimeter-wave radar measures a distance and a direction to an object by emitting millimeter waves and detecting millimeter waves reflected by the object. The camera is arranged, for example, on a rear side of a room mirror and shoots an image of the front of vehicle 1.

Sensors for pose 114 are sensors that detect a pose, a behavior, or a position of vehicle 1. Sensors for pose 114 include, for example, an inertial measurement unit (IMU) and a global positioning system (GPS). The IMU detects, for example, an acceleration in a front-rear direction, a lateral direction, and a vertical direction of vehicle 1 and an angular speed in a roll direction, a pitch direction, and a yaw direction of vehicle 1. The GPS detects a position of vehicle 1 based on information received from a plurality of GPS satellites that orbit the Earth.

Sensor cleaning 115 is configured to remove with a cleaning solution or a wiper, soiling attached to various sensors (a lens of the camera or a portion from which laser beams are emitted) during traveling of vehicle 1.

External signage 116 is an apparatus that is controlled by compute assembly 111 of ADS 11 and displays a prescribed message to drivers of other vehicles outside base vehicle 30 and passersby around base vehicle 30. External signage 116 is implemented by, for example, a liquid crystal display (LCD), a light emitting diode (LED) display, an organic electro luminescence (EL) display or the like.

VCIB 40 includes a main VCIB 41 and a sub VCIB 42. VCIBs 41 and 42 include processors 411 and 421 such as CPUs and memories 412 and 422 such as ROMs and RAMs, respectively. Programs executable by processors 411 and 421 and data processed by the programs are stored in memories 412 and 422, respectively. Main VCIB 41 and communication module 111A are communicatively connected to each other through a communication bus 43 (main bus). Sub VCIB 42 and communication module 111B are communicatively connected to each other through a communication bus 44 (sub bus). Furthermore, main VCIB 41 and sub VCIB 42 are communicatively connected to each other.

VCIBs 41 and 42 each relay control requests and vehicle information between ADS 11 and VP 20. VCIBs 41 and 42 interface between base vehicle 30 and ADS 11 through communication buses 43 and 44, respectively. VCIBs 41 and 42 each generate a control command from a control request from ADS 11 with the use of an API.

For example, a control command corresponding to a control request supplied from ADS 11 to VCIB 40 includes a propulsion direction command requesting switching of the shift range, an immobilization command requesting activation/deactivation of the EPB and the P-Lock apparatus, an acceleration command requesting acceleration or deceleration of vehicle 1, a wheel steer angle command requesting a wheel steer angle of a steering wheel, an autonomization command requesting switching between an autonomous mode (autonomous driving mode) and a manual mode (manual driving mode), and a standstill command requesting keeping on stationary or keeping off stationary of the vehicle.

Then, VCIBs 41 and 42 each output the generated control command to a corresponding system of a plurality of systems included in VP 20. VCIBs 41 and 42 each generate information indicating a vehicle status from the vehicle information from each system of VP 20 with the use of the API. The information indicating the vehicle status may be information identical to the vehicle information or may be information extracted from the vehicle information to be used for processing performed by ADS 11. VCIBs 41 and 42 each output the generated information indicating the vehicle status to ADS 11.

Brake system 32 includes brake systems 321 and 322. Steering system 33 includes steering systems 331 and 332. Powertrain system 34 includes a vehicle fixation system 340 and propulsion system 343. Vehicle fixation system 340 includes vehicle fixation systems 341 and 342.

Though VCIB 41 and VCIB 42 are basically equivalent in function to each other, they are partially different in systems connected thereto that are included in VP 20. Specifically, main VCIB 41, brake system 321, steering system 331, vehicle fixation systems 341 and 342, propulsion system 343, and body system 36 are communicatively connected to one another through a communication bus. Sub VCIB 42, brake system 322, steering system 332, vehicle fixation systems 341 and 342, and body system 36 are communicatively connected to one another through a communication bus.

As VCIBs 41 and 42 equivalent in function relating to an operation of at least one of (for example, braking or steering) systems are thus included in VCIB 40, control systems between ADS 11 and VP 20 are redundant. Thus, when some kind of failure occurs in the system, the function of VP 20 can be maintained by switching between the control systems as appropriate or disconnection of a control system where failure has occurred.

Brake systems 321 and 322 include processors 3211 and 3221 such as CPUs and memories 3212 and 3222 such as ROMs and RAMs, respectively. Brake systems 321 and 322 are each configured to control a braking apparatus. Brake systems 321 and 322 generate braking commands to the braking apparatus in accordance with control requests outputted from ADS 11 through VCIBs 41 and 42, respectively. Brake system 321 and brake system 322 may be equivalent in function to each other. Alternatively, one of brake systems 321 and 322 may be configured to independently control braking force of each wheel and the other thereof may be configured to control braking force such that equal braking force is generated in the wheels. For example, brake systems 321 and 322 may control the braking apparatus based on a braking command generated by any one of them, and when a failure occurs in that brake system, they may control the braking apparatus based on a braking command generated by the other of them.

Steering systems 331 and 332 include processors 3311 and 3321 such as CPUs and memories 3312 and 3322 such as ROMs and RAMs, respectively. Steering systems 331 and 332 are each configured to control a steering angle of a steering wheel of vehicle 1 with a steering apparatus. Steering systems 331 and 332 generate steering commands to the steering apparatus in accordance with control requests outputted from ADS 11 through VCIBs 41 and 42, respectively. Steering system 331 and steering system 332 may be equivalent in function to each other. Alternatively, steering systems 331 and 332 may control the steering apparatus based on the steering command generated by any one of them, and when a failure occurs in that steering system, they may control the steering apparatus based on a steering command generated by the other of them.

Vehicle fixation systems 341 and 342 include processors 3411 and 3421 such as CPUs and memories 3412 and 3422 such as ROMs and RAMs, respectively. Vehicle fixation systems 341 and 342 each control the EPB and the P-Lock apparatus in accordance with control requests outputted from ADS 11 through VCIBs 41 and 42. The EPB is provided separately from the braking apparatus (a disc brake system or the like), and fixes a wheel by an operation of an actuator. The EPB, for example, activates with an actuator, a drum brake for a parking brake provided in at least one of a plurality of wheels to fix the wheel, or activates a braking apparatus to fix a wheel with an actuator capable of regulating a hydraulic pressure to be supplied to the braking apparatus separately from brake systems 321 and 322. Vehicle fixation systems 341 and 342 have a brakeholding function, and are configured to switch between activation and release of brakehold.

For example, when the control request includes a control request to set the shift range to a parking range (P range), vehicle fixation systems 341 and 342 each activate the P-Lock apparatus, and when the control request includes a control request to set the shift range to a shift range other than the P range, vehicle fixation systems 341 and 342 each deactivate the P-Lock apparatus. The P-Lock apparatus fits a protrusion provided at a tip end of a parking lock pawl, a position of which is adjusted by an actuator, into a tooth of a gear (locking gear) provided as being coupled to a rotational element in the transmission of vehicle 1. Rotation of an output shaft of the transmission is thus fixed and the wheel is fixed.

Propulsion system 343 includes a processor 3431 such as a CPU and a memory 3432 such as a ROM and a RAM. Propulsion system 343 includes a direction control system and a propulsive system. The direction control system is connected to VCIB 40. The direction control system controls a direction of travel (forward travel or rearward travel) of VP 20 by switching the shift range of the shift apparatus in accordance with the control request outputted from ADS 11 through VCIB 41. The shift ranges include a forward travel range (D range) and a rearward travel range (R range) in addition to the P range and a neutral range (N range). The propulsive system is connected to VCIB 40. The propulsive system controls propulsive force (for example, acceleration and deceleration) of VP 20 by controlling driving force from a drive source (a motor generator and an engine).

Active safety system 35 includes a processor 351 such as a CPU and a memory 352 such as a ROM and a RAM. Active safety system 35 is communicatively connected to brake system 321. As described previously, active safety system 35 detects an obstacle in front by using camera 54 and/or radar sensor 55, and when it determines that there is possibility of collision, it outputs a braking command to brake system 321 so as to increase braking force.

Body system 36 includes a processor 361 such as a CPU and a memory 362 such as a ROM and a RAM. Body system 36 controls components such as a direction indicator (hazard light 363), horn 365, a wiper, and meter panel 364 in accordance with a control request outputted from ADS 11 through VCIBs 41 and 42.

For example, when an autonomous mode (autonomous driving mode) is selected by an operation by the user onto HMI 112 in vehicle 1, autonomous driving is carried out. During autonomous driving, ADS 11 initially creates a driving plan as described previously. Examples of the driving plan include a plan to continue straight travel, a plan to turn left/right at a prescribed intersection on a predetermined travel path, and a plan to change a travel lane. ADS 11 calculates a controllable physical quantity (an acceleration, a deceleration, and a wheel steer angle) necessary for operations of vehicle 1 in accordance with the created driving plan. ADS 11 splits the physical quantity for each execution cycle time of the API. ADS 11 outputs a control request representing the split physical quantity to VCIB 40 by means of the API. Furthermore, ADS 11 obtains a vehicle status (an actual direction of movement of vehicle 1 and a state of fixation of the vehicle) from VP 20 and creates again the driving plan on which the obtained vehicle status is reflected. ADS 11 thus allows autonomous driving of vehicle 1.

As described above, in vehicle 1, as paths through which signals are exchanged between ADK 10 and VP 20, there are two systems, i.e., a first path via communication bus 43 serving as a main bus and main VCIB 41 and a second path via communication bus 44 serving as a sub bus and sub VCIB 42. There is room for consideration in carrying out appropriate control when both of these two paths fail.

Thus, when a two-system failure occurs while the driving mode set in VCIB 41 is the autonomous driving mode, VCIB 41 carries out control for emergency stop of base vehicle 30 and controls an output unit (e.g., hazard light 363, meter panel 364 or horn 365) to output a prescribed sign in a prescribed manner, or when the two-system failure occurs while the driving mode set in VCIB 42 is the autonomous driving mode, VCIB 42 carries out the control for emergency stop of base vehicle 30 and controls the output unit (e.g., hazard light 363, meter panel 364 or horn 365) to output the prescribed sign in a prescribed manner, the two-system failure being a failure that makes communication or control via the first path and the second path impossible, and VCIB 41 or 42 sets the prescribed manner in accordance with a request from ADK 10.

Thus, the prescribed manner of outputting the prescribed sign is appropriately set in accordance with the request from ADK 10, before the two-system failure occurs. As a result, even when both of the two paths fail, the prescribed sign can be appropriately outputted to the surroundings.

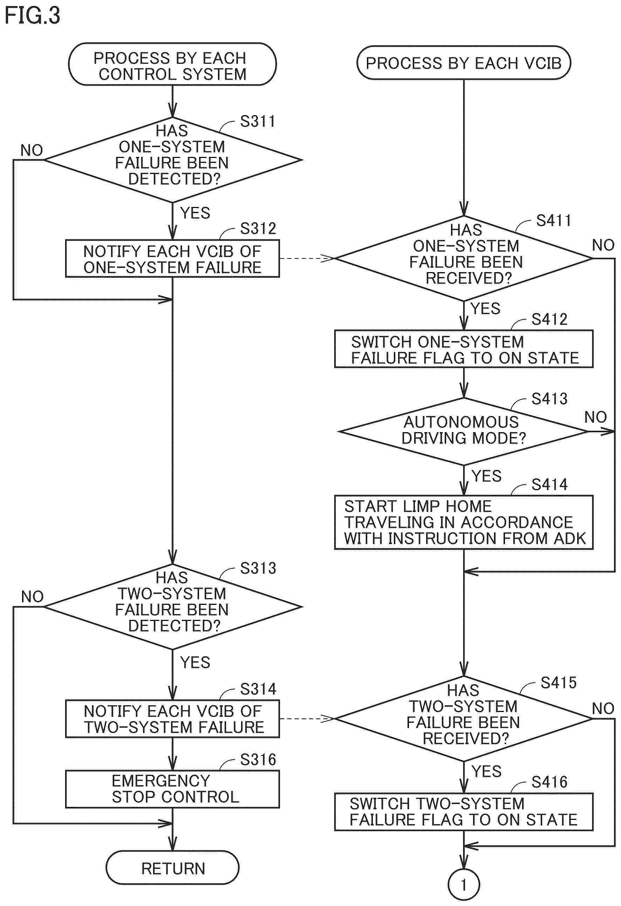

Fig. 3 is a flowchart showing a flow of a process performed by each control system and a first process performed by each of VCIBs 41 and 42 in the present embodiment. Referring to Fig. 3, the process by each control system is called from a higher-level process and performed at prescribed cycles by a processor of a control system of base vehicle 30 (e.g., each of processors 3211 and 3221 of brake systems 321 and 322, processors 3411 and 3421 of vehicle fixation systems 341 and 342, and processors 3311 and 3321 of steering systems 331 and 332). The process by each VCIB is called from a higher-level process and performed at prescribed cycles by each of processors 411 and 421 of VCIBs 41 and 42.

The processor of the control system determines whether or not a one-system failure that makes communication or control via the first path or the second path impossible has been detected (step S311). When the processor of the control system determines that the one-system failure has been detected (YES in step S311), the processor of the control system notifies each of VCIBs 41 and 42 that the one-system failure has been detected (step S312).

Each of processors 411 and 421 of VCIBs 41 and 42 determines whether or not it has received a notification about detection of the one-system failure from the control system (step S411). When each of processors 411 and 421 of VCIBs 41 and 42 determines that it has received the notification about detection of the one-system failure from any control system (YES in step S411), each of processors 411 and 421 of VCIBs 41 and 42 switches a one-system failure flag indicating whether or not the one-system failure has occurred to an ON state indicating that the one-system failure has occurred (step S412).

Each of processors 411 and 421 of VCIBs 41 and 42 determines whether or not the driving mode of each of VCIBs 41 and 42 is the autonomous driving mode (step S413). When each of processors 411 and 421 of VCIBs 41 and 42 determines that the driving mode of each of VCIBs 41 and 42 is the autonomous driving mode (YES in step S413), each of processors 411 and 421 of VCIBs 41 and 42 starts limp home traveling control in accordance with an instruction from ADK 10 (step S414). The limp home traveling is traveling for evacuating to a place safer than a place on a road, such as an off-the-road place, a rest area, a parking lot or a roadside.

The processor of the control system determines whether or not the two-system failure that makes communication or control via the first path and the second path impossible has been detected (step S313). When the processor of the control system determines that the two-system failure has been detected (YES in step S313), the processor of the control system notifies each of VCIBs 41 and 42 that the two-system failure has been detected (step S314) and carries out control for emergency stop of base vehicle 30 (step S316). The control for emergency stop may include only deceleration control, or may include minimum steering control for moving base vehicle 30 to a roadside or the like safer than a place on a lane, in addition to the deceleration control. When the processor of the control system determines that the two-system failure has not been detected (NO in step S313), or after step S316, the processor of the control system returns the process to be performed to the higher-level process from which this process by each control system was called.

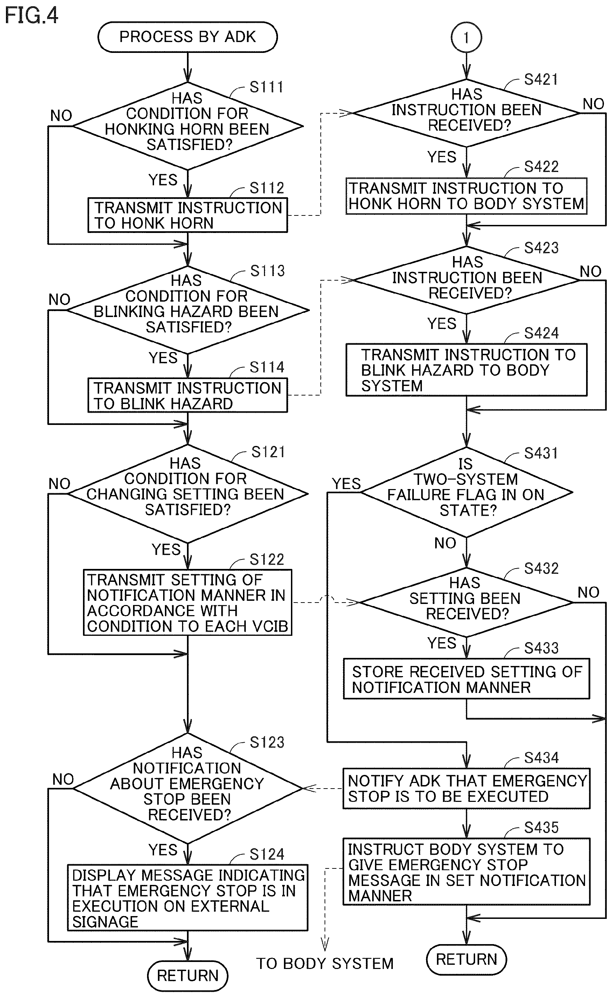

When each of processors 411 and 421 of VCIBs 41 and 42 determines that it has not received the notification about detection of the one-system failure from any control system (NO in step S411), when each of processors 411 and 421 of VCIBs 41 and 42 determines that the driving mode of each of VCIBs 41 and 42 is not the autonomous driving mode (NO in step S413), or after step S414, each of processors 411 and 421 of VCIBs 41 and 42 determines whether or not it has received a notification about detection of the two-system failure from the control system (step S415). When each of processors 411 and 421 of VCIBs 41 and 42 determines that it has received the notification about detection of the two-system failure from any control system (YES in step S415), each of processors 411 and 421 of VCIBs 41 and 42 switches a two-system failure flag indicating whether or not the two-system failure has occurred to an ON state indicating that the two-system failure has occurred (step S416). Thereafter, each of processors 411 and 421 of VCIBs 41 and 42 causes the process to be performed to proceed to a process starting from the circled number "1" in Fig. 4 described below.

Fig. 4 is a flowchart showing a flow of a process performed by ADK 10 and a second process performed by each of VCIBs 41 and 42 in the present embodiment. Referring to Fig. 4, the process by the ADK is called from a higher-level process and performed at prescribed cycles by compute assembly 111 of ADS 11 of ADK 10. The process by each VCIB is performed subsequently to the first process shown in Fig. 3 at prescribed cycles by each of processors 411 and 421 of VCIBs 41 and 42.

Compute assembly 111 of ADS 11 of ADK 10 determines whether or not a condition for honking horn 365 has been satisfied in a currently performed autonomous driving program (step S111). When compute assembly 111 of ADS 11 of ADK 10 determines that the condition for honking horn 365 has been satisfied (YES in step S111), compute assembly 111 transmits an instruction to honk horn 365 to each of VCIBs 41 and 42 (step S112).

Each of processors 411 and 421 of VCIBs 41 and 42 determines whether or not it has received the instruction to honk horn 365 from ADK 10 (step S421). When each of processors 411 and 421 of VCIBs 41 and 42 determines that it has received the instruction (YES in step S421), each of processors 411 and 421 of VCIBs 41 and 42 transmits an instruction to honk horn 365 to body system 36 (step S422).

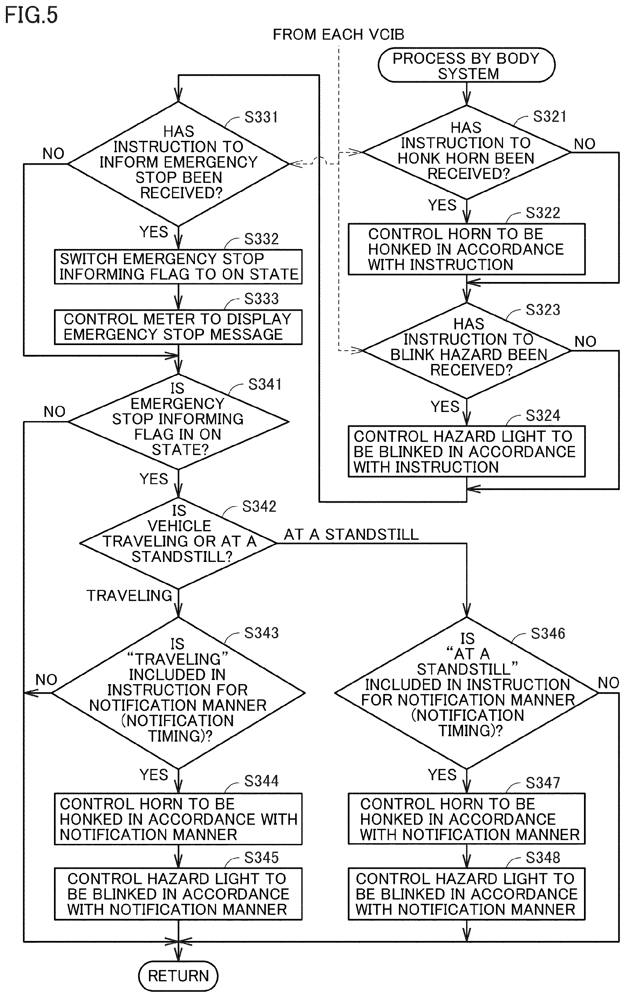

Fig. 5 is a flowchart showing a flow of a process performed by body system 36 in the present embodiment. Referring to Fig. 5, the process by the body system is called from a higher-level process and performed at prescribed cycles by processor 361 of body system 36. Processor 361 of body system 36 determines whether or not it has received the instruction to honk horn 365 from each of VCIBs 41 and 42 (step S321). When processor 361 of body system 36 determines that it has received the instruction to honk horn 365 (YES in step S321), processor 361 of body system 36 controls horn 365 to be honked in accordance with the instruction (step S322).

Returning to Fig. 4, when compute assembly 111 of ADS 11 of ADK 10 determines that the condition for honking horn 365 has not been satisfied (NO in step S111), or after step S112, compute assembly 111 of ADS 11 determines whether or not a condition for blinking hazard light 363 has been satisfied in the currently performed autonomous driving program (step S113). When compute assembly 111 of ADS 11 determines that the condition for blinking hazard light 363 has been satisfied (YES in step S113), compute assembly 111 transmits an instruction to blink hazard light 363 to each of VCIBs 41 and 42 (step S114).

When each of processors 411 and 421 of VCIBs 41 and 42 determines that it has not received the instruction to honk horn 365 (NO in step S421), or after step S422, each of processors 411 and 421 of VCIBs 41 and 42 determines whether or not it has received the instruction to blink hazard light 363 from ADK 10 (step S423). When each of processors 411 and 421 of VCIBs 41 and 42 determines that it has received the instruction (YES in step S423), each of processors 411 and 421 of VCIBs 41 and 42 transmits the instruction to blink hazard light 363 to body system 36 (step S424).

Proceeding to Fig. 5, when processor 361 of body system 36 determines that it has not received the instruction to honk horn 365 (NO in step S321), or after step S322, processor 361 of body system 36 determines whether or not it has received the instruction to blink hazard light 363 from each of VCIBs 41 and 42 (step S323). When processor 361 of body system 36 determines that it has received the instruction to blink hazard light 363 (YES in step S323), processor 361 of body system 36 controls hazard light 363 to be blinked in accordance with the instruction (step S324).

Returning to Fig. 4, when compute assembly 111 of ADS 11 of ADK 10 determines that the condition for blinking hazard light 363 has not been satisfied (NO in step S113), or after step S114, compute assembly 111 of ADS 11 determines whether or not a condition for changing a setting of a notification manner by the output unit (e.g., hazard light 363 or horn 365) has been satisfied (step S121). The condition for changing the setting of the notification manner may be, for example, a condition that base vehicle 30 has crossed a borderline (e.g., a national borderline, a prefectural borderline or a borderline of a restricted area) between regions having different restrictions on notification by the output unit, or may be a condition that a prescribed time period has elapsed since the previous setting change.

When compute assembly 111 of ADS 11 of ADK 10 determines that the condition for changing the setting of the notification manner has been satisfied (YES in step S121), compute assembly 111 of ADS 11 transmits the setting of the notification manner (e.g., a setting of the notification timing or the like) in accordance with the restriction of the region to each of VCIBs 41 and 42 (step S122).

When each of processors 411 and 421 of VCIBs 41 and 42 determines that it has not received the instruction to blink hazard light 363 (NO in step S423), or after step S424, each of processors 411 and 421 of VCIBs 41 and 42 determines whether or not the two-system failure flag is in the ON state (step S431). When each of processors 411 and 421 of VCIBs 41 and 42 determines that the two-system failure flag is not in the ON state (NO in step S431), each of processors 411 and 421 of VCIBs 41 and 42 determines whether or not it has received the setting of the notification manner by the output unit (step S432). When each of processors 411 and 421 of VCIBs 41 and 42 determines that it has received the setting (YES in step S432), each of processors 411 and 421 of VCIBs 41 and 42 causes each of memories 412 and 422 to store the received setting of the notification manner by the output unit (step S433).

When each of processors 411 and 421 of VCIBs 41 and 42 determines that the two-system failure flag is in the ON state (YES in step S431), each of processors 411 and 421 of VCIBs 41 and 42 notifies ADK 10 that emergency stop is to be executed (step S434). In addition, each of processors 411 and 421 of VCIBs 41 and 42 instructs body system 36 to give an emergency stop message in the notification manner having the setting stored in each of memories 412 and 422 (step S435). When each of processors 411 and 421 of VCIBs 41 and 42 determines that it has not received the setting of the notification manner (NO in step S432), after step S434, or after step S435, each of processors 411 and 421 of VCIBs 41 and 42 returns the process to be performed to the higher-level process from which this process by each VCIB was called.

When compute assembly 111 of ADS 11 of ADK 10 determines that the condition for changing the setting of the notification manner has not been satisfied (NO in step S121), or after step S122, compute assembly 111 of ADS 11 determines whether or not it has received a notification about emergency stop from each of VCIBs 41 and 42 (step S123). When compute assembly 111 of ADS 11 determines that it has received the notification about emergency stop (YES in step S123), compute assembly 111 of ADS 11 controls external signage 116 to display a message indicating that emergency stop is in execution (step S124). When compute assembly 111 of ADS 11 determines that it has not received the notification about emergency stop (NO in step S123), or after step S124, compute assembly 111 of ADS 11 returns the process to be performed to the higher-level process from which this process by the ADK was called.

Proceeding to Fig. 5, when processor 361 of body system 36 determines that it has not received the instruction to blink hazard light 363 (NO in step S323), or after step S324, processor 361 of body system 36 determines whether or not it has received an instruction to give the emergency stop message (step S331). When processor 361 of body system 36 determines that it has received the instruction (YES in step S331), processor 361 of body system 36 switches an emergency stop informing flag to an ON state (step S332). The emergency stop informing flag is a flag indicating whether or not the emergency stop message is being given, and indicates that the emergency stop message is being given when it is in the ON state, and indicates that the emergency stop message is not being given when it is in the OFF state. In addition, processor 361 of body system 36 controls meter panel 364 to display the emergency stop message (step S333).

When processor 361 of body system 36 determines that it has not received the instruction to give the emergency stop message (NO in step S331), or after step S333, processor 361 of body system 36 determines whether or not the emergency stop informing flag is in the ON state (step S341). When processor 361 of body system 36 determines that the emergency stop informing flag is in the ON state (YES in step S341), processor 361 of body system 36 determines whether base vehicle 30 is traveling or at a standstill (step S342).

When processor 361 of body system 36 determines in step S342 that base vehicle 30 is traveling, processor 361 of body system 36 determines whether or not "traveling" is included in an instruction for the notification manner (notification timing) that is included in the instruction to give the emergency stop message (step S343). When processor 361 of body system 36 determines that "traveling" is included (YES in step S343), processor 361 of body system 36 controls horn 365 to be honked in accordance with the instruction for the notification manner (step S344). In addition, processor 361 of body system 36 controls hazard light 363 to be blinked in accordance with the instruction for the notification manner (step S345).

When processor 361 of body system 36 determines in step S342 that base vehicle 30 is at a standstill, processor 361 of body system 36 determines whether or not "at a standstill" is included in the instruction for the notification manner (notification timing) that is included in the instruction to give the emergency stop message (step S346). When processor 361 of body system 36 determines that "at a standstill" is included (YES in step S346), processor 361 of body system 36 controls horn 365 to be honked in accordance with the instruction for the notification manner (step S347). In addition, processor 361 of body system 36 controls hazard light 363 to be blinked in accordance with the instruction for the notification manner (step S348).

When processor 361 of body system 36 determines that the emergency stop informing flag is not in the ON state (NO in step S341), when processor 361 of body system 36 determines that "traveling" is not included in the instruction for the notification manner (notification timing) while base vehicle 30 is traveling (NO in step S343), after step S345, when processor 361 of body system 36 determines that "at a standstill" is not included in the instruction for the notification manner (notification timing) while base vehicle 30 is at a standstill (NO in step S346), or after step S348, processor 361 of body system 36 returns the process to be performed to the higher-level process from which this process by the body system was called.

### [Modifications]

(1) In the above-described embodiment, as shown in step S122, step S432, step S433, and step S435 in Fig. 4 and step S331 to step S333 and step S341 to step S348 in Fig. 5, the instructions are given to body system 36 by each of VCIBs 41 and 42, whereby the prescribed signs (e.g., the sign by honking horn 365, the sign by blinking hazard light 363, and the sign by displaying the message on meter panel 364) are indirectly outputted as the emergency stop message in the notification manner set in accordance with the request from ADK 10. However, the present disclosure is not limited thereto. The prescribed signs may be directly outputted by each of VCIBs 41 and 42 as the emergency stop message in the notification manner set in accordance with the request from ADK 10.
(2) In the above-described embodiment, each of function units such as brake systems 321 and 322, vehicle fixation systems 341 and 342, steering systems 331 and 332, or body system 36 that perform a specific function used for autonomous driving and manual driving has the processor and the memory. The function units perform the specific function of base vehicle 30 in cooperation with VCIBs 41 and 42. However, VCIBs 41 and 42 and the processor and the memory of each function unit may share the functions in any way. For example, a part of the function performed by the processor and the memory of each function unit may be performed by VCIBs 41 and 42.
(3) In the above-described embodiment, as shown in step S341 to step S348 in Fig. 5, the notification manner of the emergency stop message that is set in accordance with the request from ADK 10 is the notification timing. However, the present disclosure is not limited thereto. The notification manner of the emergency stop message may be any other manner, and may be, for example, the size of a notification display or the way to display a notification display, or the volume or the tone of a notification sound.
(4) In the above-described embodiment, external signage 116 is provided on the ADK 10 side. However, the present disclosure is not limited thereto. External signage 116 may be provided on the base vehicle 30 side and may, for example, be connected to body system 36. External signage 116 on the base vehicle 30 side may be controlled similarly to hazard light 363 and horn 365 described above.
(5) The above-described embodiment can be considered as disclosure of a device such as vehicle 1, ADK 10, ADS 11, VP 20, base vehicle 30 or VCIBs 41 and 42, or can be considered as disclosure of a control method or a control program in the device.

### [Summary]

(1) As shown in Figs. 1 and 2, VP 20 is a VP to and from which ADK 10 that gives an instruction for autonomous driving is attachable and detachable, the VP being configured to be capable of autonomous driving. As shown in Figs. 1 and 2, VP 20 includes: base vehicle 30 including an output unit (e.g., hazard light 363, horn 365 or meter panel 364) that outputs a prescribed sign; VCIB 41 that relays control communication between ADK 10 and base vehicle 30 via a first path; and VCIB 42 that relays control communication between ADK 10 and base vehicle 30 via a second path. As shown in Figs. 1 and 2, a driving mode of VP 20 set in each of VCIBs 41 and 42 is switchable to an autonomous driving mode or a manual driving mode.

As shown in Figs. 3 to 5, when a two-system failure occurs while the driving mode set in main VCIB 41 is the autonomous driving mode, the processor of each control system of base vehicle 30 carries out control for emergency stop of base vehicle 30 (e.g., step S316) and main VCIB 41 controls the output unit to output the prescribed sign in a prescribed manner (e.g., step S331 to step S333 and step S341 to step S348), the two-system failure being a failure that makes communication or control via the first path and the second path impossible. As shown in Figs. 3 to 5, when the two-system failure occurs while the driving mode set in sub VCIB 42 is the autonomous driving mode, the processor of each control system of base vehicle 30 carries out the control for emergency stop of base vehicle 30 (e.g., step S316) and sub VCIB 42 controls the output unit to output the prescribed sign in a prescribed manner (e.g., step S331 to step S333 and step S341 to step S348). VCIB 41 or 42 sets the prescribed manner in accordance with a request from ADK 10 (e.g., step S122, step S432 and step S433).

Thus, the prescribed manner of outputting the prescribed sign is appropriately set in accordance with the request from ADK 10, before the two-system failure occurs. As a result, even when both of the two paths fail, the prescribed sign can be appropriately outputted to the surroundings. In addition, a manner of notification for informing the outside of the vehicle that emergency stop is in execution can be easily changed in accordance with the laws and regulations or the like of an area where base vehicle 30 travels.

(2) As shown in step S341 to step S348 in Fig. 5, the prescribed manner may be a timing when the prescribed sign is outputted.

Thus, the timing when the prescribed sign is outputted is appropriately set in accordance with the request from ADK 10, before the two-system failure occurs. As a result, even when both of the two paths fail, the prescribed sign can be outputted to the surroundings at appropriate timing.

(3) As shown in step S431 to step S433 in Fig. 4, when the two-system failure occurs, VCIB 41 or 42 may prohibit setting of the prescribed manner in accordance with the request from ADK 10 (when each of VCIBs 41 and 42 determines in step S431 that the two-system failure flag is in the ON state, processing in step S432 and step S433 is not performed).

Thus, the request from ADK 10 can become abnormal when the two-system failure occurs, and thus, setting of the prescribed manner in accordance with such request is prohibited. As a result, the prescribed manner of outputting the prescribed sign can be prevented from being inappropriately set. Therefore, the system reliability can be increased.

(4) As shown in step S431 and step S434 in Fig. 4, when the two-system failure occurs, VCIB 41 or 42 may issue, to ADK 10, a request to cause an external output unit (e.g., external signage 116) to output a specific sign (e.g., a sign by displaying a message indicating that emergency stop is in execution), the external output unit being controlled by ADK 10 and outputting the specific sign.

Thus, the specific sign can be outputted by means of not only control by VCIB 41 or 42 but also control by ADK 10.

Although the embodiment of the present disclosure has been described, it should be understood that the embodiment disclosed herein is illustrative and non-restrictive in every respect. The scope of the present disclosure is defined by the terms of the claims and is intended to include any modifications within the scope and meaning equivalent to the terms of the claims.

## Claims

1. A vehicle platform (20) to and from which an autonomous driving kit (10) that gives an instruction for autonomous driving is attachable and detachable, the vehicle platform (20) being configured to be capable of autonomous driving, the vehicle platform (20) comprising:
a base vehicle (30) including an output unit (363, 364, 365) configured to output a prescribed sign;
a first vehicle control interface box (41) configured to relay control communication between the autonomous driving kit (10) and the base vehicle (30) via a first path; and
a second vehicle control interface box (42) configured to relay control communication between the autonomous driving kit (10) and the base vehicle (30) via a second path, wherein
a driving mode of the vehicle platform (20) set in each of the first vehicle control interface box (41) and the second vehicle control interface box (42) is switchable to an autonomous driving mode or a manual driving mode,
when a two-system failure occurs while the driving mode set in the first vehicle control interface box (41) is the autonomous driving mode, the base vehicle (30) carries out control for emergency stop of the base vehicle (30) (S316) and the first vehicle control interface box (41) controls the output unit to output the prescribed sign in a prescribed manner (S331 to S333 and S341 to S348), or when the two-system failure occurs while the driving mode set in the second vehicle control interface box (42) is the autonomous driving mode, the base vehicle (30) carries out the control for emergency stop of the base vehicle (30) (S316) and the second vehicle control interface box (42) controls the output unit to output the prescribed sign in a prescribed manner (S331 to S333 and S341 to S348), the two-system failure being a failure that makes communication or control via the first path and the second path impossible, and
the first vehicle control interface box (41) or the second vehicle control interface box (42) sets the prescribed manner in accordance with a request from the autonomous driving kit (10) (S122, S432 and S433).

2. The vehicle platform (20) according to claim 1, wherein
the prescribed manner is a timing when the prescribed sign is outputted.

3. The vehicle platform (20) according to claim 1, wherein
when the two-system failure occurs, the first vehicle control interface box (41) or the second vehicle control interface box (42) prohibits setting of the prescribed manner in accordance with the request from the autonomous driving kit (10) (S431 to S433).

4. The vehicle platform (20) according to claim 1, wherein
when the two-system failure occurs, the first vehicle control interface box (41) or the second vehicle control interface box (42) issues, to the autonomous driving kit (10), a request to cause an external output unit (116) to output a specific sign (S431 and S434), the external output unit being controlled by the autonomous driving kit and outputting the specific sign.

5. A vehicle (1) comprising the vehicle platform (20) according to any of claims 1 to 4.

6. The vehicle (1) of claim 5, comprising an autonomous driving kit (10) configured to give an instruction for autonomous driving of the vehicle (1).

7. The vehicle (1) of claim 6, wherein the autonomous driving kit (10) is configured to be detachable to and from the vehicle platform (20).

8. A method for controlling a vehicle platform (20) to and from which an autonomous driving kit (10) that gives an instruction for autonomous driving is attachable and detachable, the vehicle platform (20) being configured to be capable of autonomous driving,
the vehicle platform (20) including:
a base vehicle (30) including an output unit that outputs a prescribed sign;
a first vehicle control interface box (41) that relays control communication between the autonomous driving kit and the base vehicle (30) via a first path; and
a second vehicle control interface box (42) that relays control communication between the autonomous driving kit and the base vehicle (30) via a second path,
a driving mode of the vehicle platform (20) set in each of the first vehicle control interface box (41) and the second vehicle control interface box (42) being switchable to an autonomous driving mode or a manual driving mode,
the method comprising:
when a two-system failure occurs while the driving mode set in the first vehicle control interface box (41) is the autonomous driving mode, carrying out, by the base vehicle (30), control for emergency stop of the base vehicle (30) (S316) and controlling, by the first vehicle control interface box (41), the output unit to output the prescribed sign in a prescribed manner (S331 to S333 and S341 to S348), or when the two-system failure occurs while the driving mode set in the second vehicle control interface box (42) is the autonomous driving mode, carrying out, by the base vehicle (30), the control for emergency stop of the base vehicle (30) (S316) and controlling, by the second vehicle control interface box (42), the output unit to output the prescribed sign in a prescribed manner (S331 to S333 and S341 to S348), the two-system failure being a failure that makes communication or control via the first path and the second path impossible; and
setting, by the first vehicle control interface box (41) or the second vehicle control interface box (42), the prescribed manner in accordance with a request from the autonomous driving kit (S122, S432 and S433).
